# EUROPEAN PATENT APPLICATION

(11) **EP 1 162 377 A1**
(43) Date of publication of application: **12.12.2001**
(21) Application number: 00304837.8
(22) Date of filing: 07.06.2000
(51) Int. Cl.: F16B 25/00

(54) **Wood screw**

(71) Applicant: Taiwan Shan Yin International Co., Ltd, Kaohsiung City, Taiwan (TW)
(72) Inventor: Su, Kou-Tsair, Kaohsiung Hsien, Taiwan (TW)
(74) Representative: Brereton, Paul Arthur

(57) **Abstract**

A screw (3) includes a shank portion (32) and a head portion (31) on one end of the shank portion (32). The shank portion (32) has at least one spiral screw thread formed thereon. The screw thread has interconnected thread sections. Each of the thread sections has a triangular cross-section along a plane radial to the shank portion (32), and inclines upwardly and gradually in a screw advancing direction relative to a horizontal plane. Each of the thread sections is defined by an upper thread base line (L2), a lower thread base line (L2'), and a thread peak line (L1) between the upper and lower thread base lines (L2,L2'). An inclined upper thread surface (333) extends between the upper thread base line (L2,L2') and the thread peak line (L1). An inclined lower thread surface (334) extends between the lower thread base line (L2') and the thread peak line (L1). The upper and lower thread surfaces (333,334) respectively form first and second angles (θ1, θ2) with a tangential plane relative to the shank portion (32) that passes through the thread peak line (L1). The first angle (θ1) is different from the second angle (θ2).

## Description

The invention relates to a wood screw, more particularly to a screw which can be driven quickly into a wooden board with a relatively small amount of force.

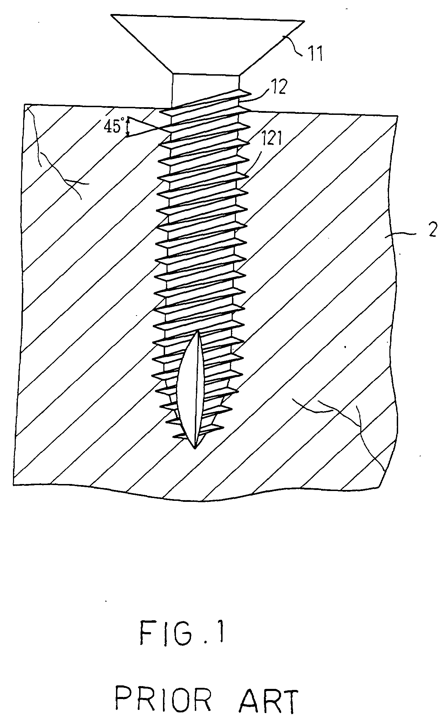

Referring to Figure 1, a conventional wood screw 1 is shown to comprise a shank portion 12 and a head portion 11 on one end of the shank portion 12.The shank portion 12 is formed with a screw thread 121 having a uniform thread diameter and a uniform pitch. The screw thread 121 has a thread angle of about 45°. When the screw 1 is driven into a wooden board 2, wood shavings fill the grooves formed between adjacent thread sections of the screw thread 121 in the shank portion 12 as the screw thread 121 cuts into the fibers of the wooden board 2, thereby resulting in a binding force between the screw 1 and the wooden board 2.

In the conventional wood screw 1, the screw 1 penetrates into the wooden board 2 by a depth equal to one pitch for every 360° rotation of the same, thereby resulting in a relatively slow screw penetrating speed. Moreover, because the grooves formed between the adjacent thread sections of the screw thread 121 are filled by the wood shavings as the screw 1 penetrates into the wooden board 2, the cutting effect of the screw thread 121 becomes duller as the depth of penetration of the screw 1 into the wooden board 2 increases, thereby resulting in further adverse affect on the screw penetrating speed due to increased resistance and in possible damage to the screw 1.

Therefore, the object of the present invention is to provide a wood screw that is capable of overcoming the aforesaid drawbacks commonly associated with the prior art.

According to the present invention, a wood screw includes a shank portion and a head portion on one end of the shank portion. The shank portion has at least one spiral screw thread formed thereon. The screw thread has interconnected thread sections. Each of the thread sections has a triangular cross-section along a plane radial to the shank portion, and inclines upwardly and gradually in a screw advancing direction relative to a horizontal plane. Each of the thread sections is defined by an upper thread base line, a lower thread base line, and a thread peak line between the upper and lower thread base lines. An inclined upper thread surface extends between the upper thread base line and the thread peak line. An inclined lower thread surface extends between the lower thread base line and the thread peak line. The upper and lower thread surfaces respectively form first and second angles with a tangential plane relative to the shank portion that passes through the thread peak line. The first angle is different from the second angle.

Other features and advantages of the present invention will become apparent in the following detailed description of the preferred embodiment with reference to the accompanying drawings, of which:
Figure 1 illustrates a conventional wood screw driven into a wood board;
Figure 2 illustrates the preferred embodiment of a wood screw according to the present invention when driven into a wooden board; and
Figure 3 is an enlarged fragmentary schematic view of the preferred embodiment.

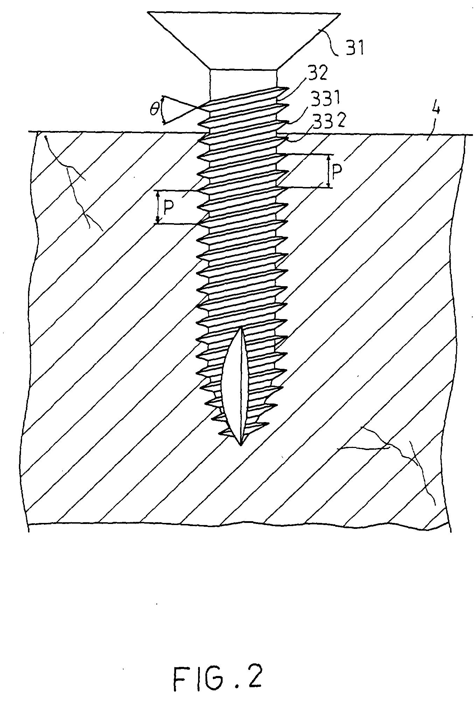

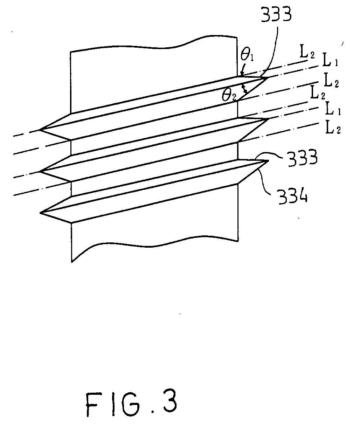

Referring to Figures 2 and 3, the preferred embodiment of a wood screw 3 according to the present invention is shown to comprise a shank portion 32 and a head portion 31 on one end of the shank portion 32. The shank portion 32 has two interleaving spiral screw threads 331, 332 formed thereon. Each screw thread 331, 332 has interconnected thread sections. Each of the thread sections of one of the screw threads 331, 332 is disposed between a respective adjacent pair of the thread sections of the other one of the screw threads 331, 332. The screw threads 331, 332 have equal pitch (P). Each of the thread sections of the screw threads 331, 332 has a triangular cross-section along a plane radial to the shank portion 32, and inclines upwardly and gradually in a screw advancing direction relative to a horizontal plane. Each of the thread sections of the screw threads 331, 332 is defined by an upper thread base line (L2), a lower thread base line (L2'), and a thread peak line (L1) between the upper and lower thread base lines (L2, L2'). An inclined upper thread surface 333 extends between the upper thread base line (L2) and the thread peak line (L1). An inclined lower thread surface 334 extends between the lower thread base line (L2') and the thread peak line (L1). The upper and lower thread surfaces 333,334 respectively form first and second angles ( θ 1, θ 2) with a tangential plane relative to the shank portion 32 that passes through the thread peak line (L1). The first angle (θ1) is different from the second angle (θ2). Preferably, the first angle (θ1) is smaller than the second angle (θ 2) to provide a sharper cutting effect for cutting quickly into the fibers of a wooden board 4. If the first angle (θ1) is larger than the second angle (θ2), the screw threads 331, 332 have a relatively dull cutting effect, thus resulting in an adverse affect on the screw penetrating speed. On the other hand, if the first angle (θ1) is equal to the second angle (θ2), and the thread angle is smaller than 45°, while a sharper cutting edge can be obtained, the strength of the screw threads 331, 332 is relatively weak, thereby resulting in possible damage to the screw 3 as the latter penetrates into the wooden board 4.

Further, in view of the dual-thread configuration of the screw 1, the screw threads 331, 332 can penetrate simultaneously into the wooden board 4 to result in an increase in the screw penetrating speed. As the screw 3 is driven into the wooden board 4, wood shavings fill the grooves formed between adjacent thread sections of the screw threads 331, 332 in the shank portion 32 due to the cutting action of the screw threads 331, 332, thereby resulting in a strong binding force between the screw 3 and the wooden board 4.

## Claims

1. A screw (3) including a shank portion (32) and a head portion (31) on one end of said shank portion (32), said shank portion (32) having at least one spiral screw thread formed thereon, said screw thread having interconnected thread sections, each of said thread sections having a triangular cross-section along a plane radial to said shank portion (32) , and inclining upwardly and gradually in a screw advancing direction relative to a horizontal plane,
**characterized in that**:
each of said thread sections is defined by an upper thread base line (L2), a lower thread base line (L2'), a thread peak line (L1) between said upper and lower thread base lines (L2,L2'), an inclined upper thread surface (333) that extends between said upper thread base line (L2)and said thread peak line (L1), and an inclined lower thread surface (334) that extends between said lower thread base line(L2') and said thread peak line (L1), said upper and lower thread surfaces (333,334) respectively forming first and second angles ( θ 1, θ 2) with a tangential plane relative to said shank portion (32) that passes through said thread peak line (L1), said first angle ( θ 1) being different from said second angle (θ2).

2. The screw (3) as claimed in Claim 1, **characterized in that** said first angle (θ1) is smaller than said second angle (θ2).

3. The screw (3) as claimed in Claim 1, **characterized in that** said shank portion (32) is formed with two interleaving ones of said spiral screw threads (331, 332) thereon such that each of said thread sections of one of said screw threads (331,332) is disposed between a respective adjacent pair of said thread sections of the other one of said screw threads (331,332).

4. The screw (3)of Claim 3, **characterized in that** said spiral screw threads (331,332)have equal pitch (P).
